# EUROPÄISCHE PATENTSCHRIFT

(11) **EP 3 875 921 B1**
(45) Veröffentlichungstag und Bekanntmachung des Hinweises auf die Patenterteilung: **30.08.2023**
(21) Anmeldenummer: 21160694.2
(22) Anmeldetag: 04.03.2021
(51) Int. Cl.: G01G 17/04, G01W 1/14

(54) **DACHSCHNEELAST-ÜBERWACHUNGSEINRICHTUNG UND DACHLASTÜBERWACHUNGSSYSTEM**
ROOF SNOW LOAD MONITORING DEVICE AND ROOF LOAD MONITORING SYSTEM
DISPOSITIF DE SURVEILLANCE DE LA CHARGE DE NEIGE SUR UN TOIT ET SYSTÈME DE SURVEILLANCE DE LA CHARGE SUR UN TOIT

(30) Priorität: 05.03.2020 DE 102020105953
(43) Veröffentlichungstag der Anmeldung: 08.09.2021
(73) Patentinhaber: Reisch, Reiner, 81243 München (DE)
(72) Erfinder: Reisch, Reiner, 81243 München (DE)
(74) Vertreter: Viering, Jentschura & Partner mbB Patent- und Rechtsanwälte

(56) Entgegenhaltungen:
- DE-U1-202011 103 925
- JP-A- 2008 082 941
- US-A1- 2019 383 967

## Beschreibung

Dachschneelast-Überwachungseinrichtung und Dachlastüberwachungssystem Die Erfindung betrifft eine Dachschneelast-Überwachungseinrichtung sowie ein Dachlastüberwachungssystem, welches eine solche Dachschneelast-Überwachungseinrichtung verwendet.

Aus der JP 2008 082941 A ist ein Dachschneelastmesssystem bekannt, welches mehrere identische Messmodule zum Erzeugen von Lastsignalen aufweist, welche mit einer zentralen Datensammeleinrichtung verbunden sind. Diese Messmodule weisen keine Batterien auf. Weitere Schneelastmesssysteme sind aus der DE 20 2011 103925 U1 und der US 2019/383967 bekannt.

Die Erfindung befasst sich mit dem Problem, Einrichtungen und Systeme bereitzustellen, mit denen Dachschneelasten, z.B. auf Gebäudedächern, mit ausreichender Verlässlichkeit, z.B. Genauigkeit, erfasst werden können und welche kosteneffizient bereitstellbar sind.

Hierzu stellt die Erfindung eine Dachschneelast-Überwachungseinrichtung gemäß dem Anspruch 1 bereit. Weiterbildende Ausführungsformen sowie Dachlastüberwachungssysteme, welche die erfindungsgemäße Dachschneelast-Überwachungseinrichtung verwenden, sind in den abhängigen bzw. weitergehenden Ansprüchen beschrieben.

Der Erfinder hat erkannt, dass mittels der Hauptwaageeinheit, welche eine relativ größere Hauptwaage-Plattformfläche hat, und der demgegenüber kleineren Nebenwaageeinheiten über einen ausgedehnten Dachflächenbereich ausreichend verlässliche Gewichtsinformationen von auf den Waageeinheiten vorliegenden Schneelasten erlangbar sind, um die Gewichtsbelastung des Daches ausreichend sicher zu erfassen, sodass Gebäude- und ggf. Personenschäden besser vermeidbar sind. Hierbei kann z.B. die Hauptwaageeinheit an einer zentralen Position des Dachs installiert sein/werden, und die Nebenwaageeinheiten können im Abstand von der Hauptwaageeinheit sowie z.B. im Abstand zueinander über die Dachfläche verteilt installiert sein/werden. Die kleineren Nebenwaageeinheiten bieten z.B. den Vorteil, dass sie auch an unzugänglicheren Örtlichkeiten eines Daches platziert werden können, wo es für die größere Hauptwaageeinheit z.B. nicht genügen Platz/Raum gibt.

Indem die Nebenwaageinheiten kleiner sind und z.B. lediglich mit der Hauptwaageeinheit, aber nicht untereinander und auch nicht mit der Empfangsstation in Datenkommunikation stehen, können die Dachschneelast-Überwachungseinrichtung und die diese verwendenden Dachlastüberwachungssysteme kostengünstig bzw. kostengünstiger bereitgestellt werden, wobei auch die Wartung kostengünstiger sein kann, da z.B. der Austausch von Bauteilen von Nebenwaageeinheiten und/oder auch z.B. der Austausch von z.B. defekten Nebenwaageeinheiten aufgrund deren insgesamt kleineren Dimensionierung mit z.B. auch kleinerer und schwächerer Batterie kostengünstiger erfolgen kann. Die Nebenwaageeinheiten, und damit deren jeweilige Neben-Steuer- und Kommunikationseinrichtung, können aber auch derart eingerichtet sein, dass sie untereinander in Signal- bzw. Datenkommunikation stehen, sodass Informations- und/oder Warnsignale auch zwischen den Nebenwaagen bzw. deren Neben-Steuer- und Kommunikationseinrichtungen untereinander kommunizierbar/übertragbar sind (unter Ausbildung eines Mesh-Netzwerks). Hierbei kann also z.B. eine wechselseitige Übertragung von Informations- und/oder Warnsignalen und/oder sonstigen Datensignalen zwischen der Haupt-Steuer- und Kommunikationseinrichtung und den Neben-Steuer- und Kommunikationseinrichtungen sowie zwischen den Neben-Steuer- und Kommunikationseinrichtungen untereinander gegeben sein, welche auch z.B. das Weiterleiten von Informations- und/oder Warnsignalen und/oder sonstigen Datensignalen von einer oder mehreren Nebenwaageeinheiten (bzw. Neben-Steuer- und Kommunikationseinrichtungen) zu einer oder mehreren weiteren Nebenwaageeinheiten (bzw. Neben-Steuer- und Kommunikationseinrichtungen) und dann von Letzterer/Letzteren weiter zur Hauptwaageeinheit (bzw. Haupt-Steuer- und Kommunikationseinrichtung) und/oder von der Hauptwaageinheit zu einer oder mehreren Nebenwaageeinheiten (bzw. Neben-Steuer- und Kommunikationseinrichtungen) und dann von Letzterer/Letzteren weiter zu einer oder mehreren weiteren Nebenwaageeinheiten (bzw. Neben-Steuer- und Kommunikationseinrichtungen) umfasst. Die wenigstens eine Empfangsstation, die in der Regel ein Kommunikationsendgerät, z.B. ein feststehendes Kommunikationsendgerät, wie z.B. ein PC und/oder ein Datenbankserver, oder ein mobiles Kommunikationsendgerät, wie z.B. ein Mobiltelefon, darstellt, ist insbesondere von der Dachschneelast-Überwachungseinrichtung entfernt gelegen angeordnet, also z.B. an einer von dem Dach entfernt gelegenen Örtlichkeit angeordnet. Die jeweilige Dachschneelast-Überwachungseinrichtung hat daher vorteilhafterweise nur eine Hauptwaageeinheit, und dementsprechend ist jedes Dach eines Gebäudes des erfindungsgemäßen Dachlastüberwachungssystems vorteilhafterweise mit nur einer Dachschneelast-Überwachungseinrichtung versehen.

Mit der seitlichen Umgrenzungsvorrichtung gemäß Anspruch 3 kann Schnee sicherer auf der Hauptwaageeinheit zurückgehalten werden, sodass damit hinsichtlich der Hauptwaageeinheit eine weiter erhöhte Messsicherheit erzielbar ist. Bei den Nebenwaageeinheiten kann eine solche seitliche Umgrenzungsvorrichtung entfallen oder zumindest erheblich kleiner/niedriger vorgesehen sein (siehe auch weiter unten), wobei mittels der Dachschneelast-Überwachungseinrichtung insgesamt dennoch über einen ausgedehnten Dachflächenbereich ausreichend verlässliche Gewichtsinformationen über die Schneelasten, die auf den Waageeinheiten und damit auf einer damit ausgestatteten Dachfläche vorliegen, erlangbar sind. Die seitliche Umgrenzungsvorrichtung der Hauptwaageeinheit ist z.B. von einem Korb gebildet, der eine seitliche Umfangswand hat, die z.B. perforiert ist, z.B. von einem Gittermaterial gebildet ist, sodass tauender Schnee aus der seitlichen Umgrenzungsvorrichtung seitlich herausgelangen und damit als Tauwasser von der Hauptwaage-Plattform ablaufen kann.

Die seitliche Umgrenzungsvorrichtung und damit z.B. die seitliche Umfangswand des Korbs, z.B. des Drahtkorbs, kann umfänglich unterbrochen oder durchgehend sein.

Die elektronische Haupt-Steuer- und Kommunikationseinrichtung kann einen oder mehrere Funksender aufweisen, um die Informations- und/oder Warnsignale direkt oder indirekt, z.B. über eine Mobilfunk-Basisstation, z.B. verwendend 3G, 4G und/oder 5G, an die wenigstens eine Empfangsstation (z.B. Kommunikationsendgerät) oder an mehrere Empfangsstationen (z.B. Kommunikationsendgeräte) zu übermitteln. So kann die Haupt-Steuer- und Kommunikationseinrichtung z.B. ein GSM/GPRS-Modem und eine damit verbundene GSM-Antenne aufweisen, mittels denen die Informations- und/oder Warnsignale via die Mobilfunk-Basisstation an z.B. eine zentrale feststehende oder mehrere feststehende Empfangsstationen (z.B. Kommunikationsendgeräte), z.B. an einen oder mehrere mit einem entsprechenden Modem ausgestatteten und/oder ans Internet angeschlossene PCs und/oder an einen oder mehrere (z.B. ans Internet angeschlossene/n) Datenbankserver, und/oder an ein oder mehrere Mobiltelefon/e, der/das/die z.B. mit einer zugehörigen Überwachungs-App ausgestattet ist/sind, übertragen werden bzw. übertragbar sind. Die Haupt-Steuer- und Kommunikationseinrichtung kann alternativ oder zusätzlich auch eine Hauptwaage-RF-Antenne zum direkten Senden der Informations- und/oder Warnsignale an die vorig beschriebene oder eine zusätzliche Empfangsstation senden, die dann mit einer entsprechenden Empfangsstation-RF-Antenne ausgestattet ist.

Optional kann die Daten- bzw. Signalübertragung zwischen der Haupt-Steuer- und Kommunikationseinrichtung und der wenigstens einen Empfangsstation (oder zumindest einer der Empfangsstationen) auch z.B. nur oder zusätzlich kabelgebunden sein, wobei die kabellose, z.B. die nur kabellose, Signal/Daten-Übertragung aus Kostengründen bevorzugt ist.

Die Haupt-Steuer- und Kommunikationseinrichtung weist z.B. eine elektronische Haupt-Steuereinheit, z.B. in Form eines Mikroprozessors auf, von welchem die ein- und ausgehenden Gewichtssignale verarbeitet und die entsprechenden Informations- und/oder Warnsignale erstellt werden. Die Informationssignale können Information über das vorliegende Gewicht, die Gewichtsverteilung, etc. umfassen, und ein oder mehrere zusätzliche Warnsignale können z.B. bei Überschreiten vorbestimmter Dachlastgrenzwerte erzeugt und an die oder jede Empfangsstation übermittelt werden. Die elektronische Haupt-Steuereinheit der Haupt-Steuer- und Kommunikationseinrichtung (und damit die Haupt-Steuer- und Kommunikationseinrichtung) kann auch z.B. eingerichtet sein, um den Funktionszustand der Hauptwaageeinheit und z.B. auch der Nebenwaageeinheiten zu überwachen. Hierzu ist die elektronische Haupt-Steuereinheit (und damit die Haupt-Steuer- und Kommunikationseinrichtung) z.B. mit der Hauptwaage-Batterie verbunden, um deren Ladezustand zu überprüfen und zu überwachen und z.B. bei schwachem Ladezustand ggf. ein entsprechendes Ladezustandssignal an die Empfangsstation zu übermitteln.

Die Neben-Steuer- und Kommunikationseinrichtung der jeweiligen Nebenwaageeinheit ist z.B. mit einer Nebenwaage-RF-Antenne ausgestattet, über welche die Nebenwaage-Gewichtssignale an die oder eine zugehörige Hauptwaage-RF-Funkantenne der Haupt-Steuer- und Kommunikationseinrichtung der Hauptwaageeinheit übermittelt werden bzw. übermittelbar sind.

Die Daten- bzw. Signalübertragung zwischen der (jeweiligen) Neben-Steuer- und Kommunikationseinrichtung und der Haupt-Steuer- und Kommunikationseinrichtung (und z.B. zwischen den Neben-Steuer- und Kommunikationseinrichtungen untereinander) kann aber auch über jede andere geeignete Funkverbindung erfolgen, wobei beispielsweise auch Bluetooth, ZigBee, WiFi/Thread und IEEE 802.15.4 herangezogen werden können. Ferner kann die Daten- bzw. Signalübertragung zwischen der (jeweiligen) Neben-Steuer- und Kommunikationseinrichtung und der Haupt-Steuer- und Kommunikationseinrichtung (und z.B. zwischen den Neben-Steuer- und Kommunikationseinrichtungen untereinander) auch mittels optischer Daten- bzw. Signalübertragung realisiert werden, z.B. mittels optischen Richtfunks oder Infra-Rot-Datenübertragung (z.B. IrDA). Ferner optional kann die Daten- bzw. Signalübertragung zwischen der (jeweiligen) Neben-Steuer- und Kommunikationseinrichtung und der Haupt-Steuer- und Kommunikationseinrichtung auch z.B. nur oder zusätzlich kabelgebunden sein, wobei die kabellose, z.B. die nur kabellose, Daten- bzw. Signalübertragung aus Kostengründen bevorzugt ist. Bevorzugt erfolgt die Daten- und/oder Signalübertragung zwischen der (jeweiligen/betreffenden) Neben-Steuer- und Kommunikationseinrichtung und der Haupt-Steuer- und Kommunikationseinrichtung (und auch z.B. unter den (jeweiligen/betreffenden) Neben-Steuer- und Kommunikationseirichtungen) direkt und kabellos (z.B. nur direkt und kabellos), und bevorzugt erfolgt die Daten- und/oder Signalübertragung zwischen der Haupt-Steuer- und Kommunikationseinrichtung und der (jeweiligen) Empfangsstation (bzw. dem (jeweiligen) Kommunikationsendgerät) indirekt und kabellos (z.B. nur indirekt und kabellos), z.B. über eine Mobilfunk-Basisstation.

Die (jeweilige) Neben-Steuer- und Kommunikationseinrichtung weist z.B. eine elektronische Neben-Steuereinheit, z.B. in Form eines Mikroprozessors, auf, von welcher die von dem zugeordneten Nebenwaage-Gewichtssensor erzeugten Nebenwaage-Gewichtssignale verarbeitet und über die Nebenwaage-RF-Antenne an die Haupt-Steuer- und Kommunikationseinrichtung (und/oder z.B. zwischen den Neben-Steuer- und Kommunikationseinrichtungen untereinander) übermittelbar sind bzw. übermittelt werden. Die (jeweilige) Neben-Steuereinheit (und damit die (jeweilige) Neben-Steuer- und Kommunikationseinrichtung) kann auch z.B. eingerichtet sein, um den Funktionszustand der Nebenwaageeinheit zu erfassen und entsprechende Überwachungsdaten und/oder Überwachungssignale an die Haupt-Steuer- und Kommunikationseinrichtung zu übermitteln, von welcher diese Daten/Signale dann entsprechend weiterverarbeitet und an die Empfangsstation übermittelt werden. Hierzu ist die (jeweilige) elektronische Neben-Steuereinheit (und damit die (jeweilige) Neben-Steuer- und Kommunikationseinrichtung) z.B. mit der zugeordneten Nebenwaage-Batterie verbunden, um deren Ladezustand zu erfassen und entsprechende Nebenwaage-Batterie-Ladezustandsdaten an die Haupt-Steuer- und Kommunikationseinrichtung zu übermitteln, von welcher diese Daten/Signale dann entsprechend weiterverarbeitet und an die Empfangsstation übermittelt werden.

Die Hauptwaageeinheit und/oder einer oder mehrere der Nebenwaageeinheiten können auch zusätzliche Sensoren, wie z.B. einen Wasserstandsensor, einen Niederschlagsgeber, einen Windmesser und/oder einen Laser-Niederschlags-Monitor aufweisen. Z.B. können Nebenwaageeinheiten mit einem solchen Wasserstandsensor an nur bestimmten Punkten eingesetzt werden, an denen sich erfahrungsgemäß Wasser stauen kann. Die entsprechenden Wasserstandinformationen werden dann wiederum von der jeweiligen Neben-Steuer- und Kommunikationseinrichtung in der wie in dieser Anmeldung beschriebenen, insbesondere kabellosen, Weise an die Haupt-Steuer- und Kommunikationseinrichtung übermittelt und von dieser ggf. weiterverarbeitet und z.B. wiederum in Form von Informations- und/oder Warnsignalen in der wie in dieser Anmeldung beschriebenen, insbesondere kabellosen, Weise an die Empfangsstation weiterübermittelt.

Die Nebenwaage-Batterie der kleineren Nebenwaageeinheiten kann z.B. mit einer geringeren Kapazität und damit mit kleinerer Baugröße vorgesehen sein als die Hauptwaage-Batterie.

Die Nebenwaage-Plattformfläche kann z.B. eine Minimalgröße von 0,07 m² haben, um noch ausreichend verlässlich das darauf vorliegende Schneegewicht zu erfassen. Bei weiterer Verkleinerung wäre ggf. die Gefahr einer Schneebrückenbildung zu hoch, bei der der Schnee ggf. eine die Nebenwaageeinheit überbrückende und damit entlastende Brückenstruktur ausbildet.

Mit den im Anspruch 5 genannten Abständen zwischen den Nebenwaageeinheiten und der Hauptwaageeinheit und ggf. zwischen den Nebenwaageeinheiten untereinander können sowohl ein auf der Dachfläche vorliegendes Schneegewicht und dessen Verteilung ausreichend sicher erfasst werden, als auch eine ausreichend störungsfreie Funk-Kommunikation zwischen der Hauptwaageeinheit und den Nebenwaageeinheiten erzielt werden.

Eine wie in Anspruch 7 und/oder Anspruch 8 beanspruchte Seitenbegrenzung der jeweiligen Nebenwaage-Plattform kann an nur zwei gegenüberliegenden Seitenrändern der Nebenwaage-Plattform angeordnet sein; sie kann sich aber auch zumindest im Wesentlichen rundum um die Nebenwaage-Plattform erstrecken. Insbesondere ist die Seitenbegrenzung der jeweiligen Nebenwaage-Plattform sehr niedrig, z.B. nur einige Zentimeter, z.B. kleiner gleich zehn Zentimeter, bevorzugt kleiner gleich fünf Zentimeter hoch.

Die Hauptwaageeinheit und die jeweilige Nebenwaageeinheit sind bevorzugt aus Kostengründen jeweils energieautark und/oder kabelanschluss-frei. Prinzipiell ist es aber auch möglich, die Hauptwaageeinheit und/oder die jeweilige Nebenwaageeinheit über einen Signalkabelanschluss an die oder eine Empfangsstation und über einen Energieversorgungskabelanschluss an eine Energieversorgung anzuschließen.

Aufgrund der Größe und des Gewichts der Hauptwaageeinheit kann diese z.B. einfach unbefestigt auf dem Dach aufgestellt sein. Die demgegenüber kleineren und leichteren Nebenwaageeinheiten sind, insbesondere falls sie in windexponierten Örtlichkeiten angeordnet sind, z.B. am Dach fixiert anzubringen. Zur Fixierung kann die jeweilige Nebenwaageinheit z.B. Flansche aufweisen, welche über Schrauben ans Gebäude-Dach montiert werden bzw. montierbar sind.

Anspruch 14 beschreibt eine Fixierungsvariante, bei der die Nebenwaageeinheit mit ihrer Nebenwaage-Plattform unter einer Dachfolie, z.B. einer auf dem Dach zu verlegenden Isolier- und/oder Wasserschutzfolie angeordnet wird/ist, und dadurch festgelegt/fixiert ist. Dabei muss die Nebenwaageeinheit nicht in ihrer Gesamtheit unterhalb der Dachfolie angeordnet sein, sondern einzelne Elemente/Bauteile der Nebenwaageeinheit, z.B. die Nebenwaage-RF-Antenne, können von der Dachfolie unbedeckt sein.

Die Erfindung wird nachfolgend anhand von Ausführungsbeispielen mit Bezugnahme auf die Zeichnung erläutert. In der Zeichnung zeigen:
Figur 1 eine schematische Ansicht einer Dachschneelast-Überwachungseinrichtung gemäß einer Ausführungsform der Erfindung,
Figur 2A eine schematische Darstellung einer Hauptwaageeinheit der Dachschneelast-Überwachungseinrichtung von Figur 1,
Figuren 2B und 2C jeweils eine Ausführungsform einer Hauptwaage-Plattform in einer schematischen Schnittansicht entlang einer Linie A-A von Figur 2A,
Figur 3 eine schematische Darstellung einer Nebenwaageeinheit der Dachschneelast-Überwachungseinrichtung von Figur 1,
Fig. 4 eine Ausführungsform einer Nebenwaage-Plattform in einem schematischen Querschnitt,
Figur 5 eine schematische Ansicht eines Dachlastüberwachungssystems gemäß einer Ausführungsform der Erfindung,
Figur 6 einen schematischen Querschnitt eines Dachteils eines Gebäudes des Dachlastüberwachungssystems von Figur 5,
Figur 7 einen schematischen Querschnitt einer an einem Gebäude-Dach fixierten Nebenwaageeinheit gemäß einer Ausführungsform der Erfindung.

In den Figuren werden für gleiche Bauteile/Elemente die gleichen Bezugszeichen verwendet.

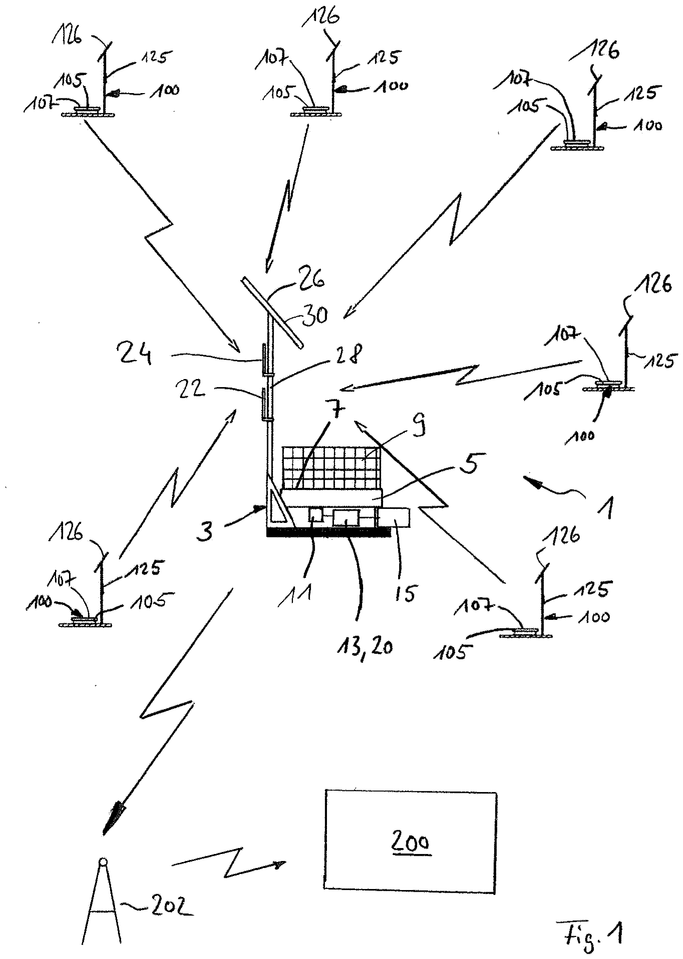

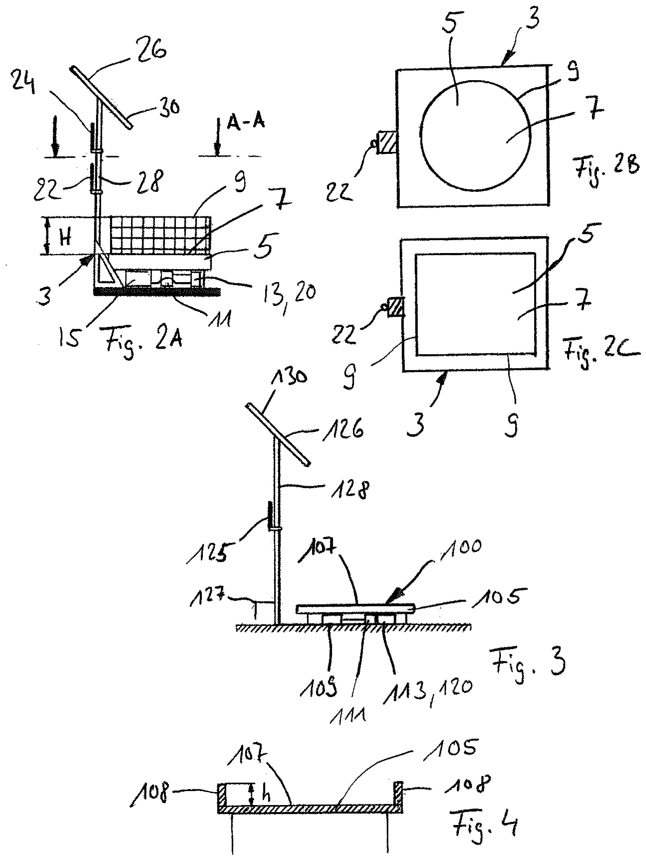

Wie aus den Figuren 1-7 ersichtlich ist, weist eine Dachschneelast-Überwachungseinrichtung 1 gemäß einer Ausführungsform der Erfindung auf:
- eine Hauptwaageeinheit 3, welche ihrerseits aufweist eine Hauptwaage-Plattform 5 mit einer (oberen) Hauptwaage-Plattformfläche 7, eine seitliche Umgrenzungsvorrichtung 9, welche auf der Hauptwaage-Plattform 5 angeordnet ist und von welcher zumindest ein Großteil der Hauptwaage-Plattformfläche 7 seitlich, z.B. umfangsrandseitig, rundum umgrenzt ist, einen Hauptwaage-Gewichtssensor 11, welcher mit der Hauptwaage-Plattform 5 verbunden ist und von welchem ein elektrisches Hauptwaage-Gewichtssignal erzeugbar ist, welches einem auf der Hauptwaage-Plattform 5 vorliegenden Gewicht, z.B. einem Gewicht einer auf der Hauptwaage-Plattform 5 vorliegenden Schneelast, zugeordnet ist, eine elektronische Haupt-Steuer- und Kommunikationseinrichtung 13, welche mit dem Hauptwaage-Gewichtssensor 11 verbunden ist, um das Hauptwaage-Gewichtssignal zu empfangen, und eine Hauptwaage-Batterie 15, welche mit dem Hauptwaage-Gewichtssensor 11 und der elektronische Haupt-Steuer- und Kommunikationseinrichtung 13 verbunden ist, um diese, und damit den Hauptwaage-Gewichtssensor 11 und/oder die elektronische Haupt-Steuer- und Kommunikationseinrichtung 13, mit elektrischer Energie zu versorgen,
- eine Mehrzahl von Nebenwaageeinheiten 100, welche in einem Abstand von der Hauptwaageeinheit 3 sowie zueinander angeordnet sind und welche ihrerseits jeweils aufweisen eine Nebenwaage-Plattform 105 mit einer (oberen) Nebenwaage-Plattformfläche 107, einen Nebenwaage-Gewichtssensor 109 (siehe Fig. 3), welcher mit der Nebenwaage-Plattform 105 verbunden ist und von welchem ein elektrisches Nebenwaage-Gewichtssignal erzeugbar ist, welches einem auf der Nebenwaage-Plattform 105 vorliegenden Gewicht, z.B. einem Gewicht einer auf der Nebenwaage-Plattform 105 vorliegenden Schneelast, zugeordnet ist, eine elektronische Neben-Steuer- und Kommunikationseinrichtung 111 (siehe Fig. 3), welche mit dem Nebenwaage-Gewichtssensor 109 verbunden ist, um das Nebenwaage-Gewichtssignal zu empfangen, und von welcher das Nebenwaage-Gewichtssignal kabellos an die Haupt-Steuer- und Kommunikationseinrichtung 13 der Hauptwaageeinheit 3 übertragbar ist, und eine Nebenwaage-Batterie 113 (siehe Fig. 3), welche mit dem Nebenwaage-Gewichtssensor 109 und der elektronischen Neben-Steuer- und Kommunikationseinrichtung 111 verbunden ist, um diese, und damit den Nebenwaage-Gewichtssensor 109 und/oder die elektronische Neben-Steuer- und Kommunikationseinrichtung 113, mit elektrischer Energie zu versorgen.

Die jeweilige Neben-Steuer- und Kommunikationseinrichtung 111 weist z.B. eine elektronische Neben-Steuereinheit 120 und eine Nebenwaage-RF-Antenne 125 auf, welche, z.B. via Draht, mit der Neben-Steuereinheit 120 verbunden ist. Die Neben-Steuer- und Kommunikationseinrichtung 111 ist z.B. mittels ihrer Neben-Steuereinheit 120 dazu eingerichtet, die von dem Nebenwaage-Gewichtssensor 109 erhaltenen Gewichtssignale zu verarbeiten und über die Nebenwaage-RF-Antenne 125 kabellos (und z.B. direkt) an die Haupt-Steuer- und Kommunikationseinrichtung 13 zu übermitteln. Die Nebenwaageeinheit 100 kann auch weitere Sensoren aufweisen, z.B. einen in Figur 3 gezeigten Wasserstandsensor 127, der mit der Neben-Steuer- und Kommunikationseinrichtung 111, z.B. via Draht, verbunden ist und dessen elektrische Wasserstandsignale von der Neben-Steuer- und Kommunikationseinrichtung 111 verarbeitbar und über die Nebenwaage-RF-Antenne 125 kabellos (und z.B. direkt) an die Haupt-Steuer- und Kommunikationseinrichtung 13 übermittelbar sind. Die Neben-Steuer- und Kommunikationseinrichtung 111 ist z.B. derart ausgestaltet, dass sie nur über eine kabellose Kommunikationsverbindung, z.B. nur über die Nebenwaage-RF-Antenne 125, mit der Haupt-Steuer- und Kommunikationseinrichtung 13 kommunizieren kann. Die Neben-Steuer- und Kommunikationseinrichtung 111 kann, z.B. mittels ihrer Neben-Steuereinheit 120, ferner eingerichtet sein, um den Ladezustand der Nebenwaage-Batterie 113 zu überwachen und um entsprechende Ladezustandssignale über die Nebenwaage-RF-Antenne 125 kabellos an die Haupt-Steuer- und Kommunikationseinrichtung 13 zu übermitteln.

Die Haupt-Steuer- und Kommunikationseinrichtung 13 weist z.B. eine elektronische Haupt-Steuereinheit 20, z.B. in Form eines Mikroprozessors, und eine Hauptwaage-RF-Antenne 22 auf, wobei die Haupt-Steuer- und Kommunikationseinrichtung 13 z.B. eingerichtet ist, um mittels der Hauptwaage-RF-Antenne 22 die von der Neben-Steuer- und Kommunikationseinrichtung 111 über deren Nebenwaage-RF-Antenne 125 gesendeten Nebenwaage-Gewichtssignale und sonstigen Signale, wie z.B. Wasserstandsignale und Nebenwaage-Batterie-Ladezustandssignale, zu empfangen (z.B. direkt zu empfangen) und, z.B. mittels ihrer Haupt-Steuereinheit 20, weiterzuverarbeiten.

Die Haupt-Steuer- und Kommunikationseinrichtung 13 weist ferner z.B. ein GSM/GPRS-Modem (nicht im Einzelnen dargestellt) und eine mit dem GSM/GPRS-Modem, z.B. via Draht, verbundene GSM-Antenne 24 auf, wobei die Haupt-Steuer- und Kommunikationseinrichtung 13, z.B. mittels ihrer Haupt-Steuereinheit 20, dazu eingerichtet, um die in Abhängigkeit von den empfangenen Hauptwaage- und Nebenwaage-Gewichtssignalen ein Informations- und/oder Warnsignal (oder Informations- und/oder Warnsignale) zu erzeugen und kabellos, in dieser Ausführungsform über die GSM-Antenne 24, an wenigstens eine Empfangsstation 200 zu übertragen, um dort von einem Benutzer erfasst werden zu können. Die Empfangsstation 200 stellt ein Kommunikationsendgerät dar.

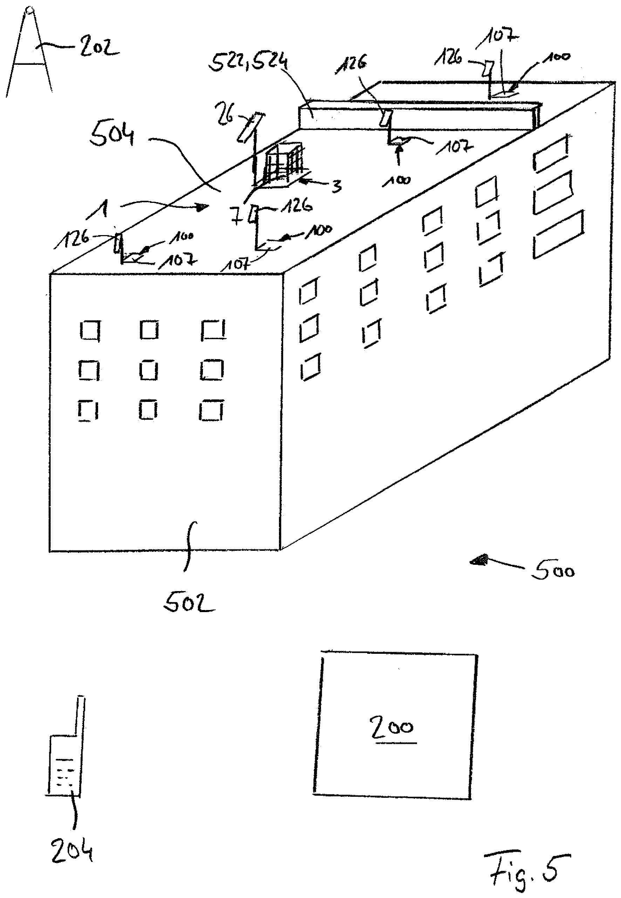

Diese Übertragung an die wenigstens eine Empfangsstation 200 kann z.B. indirekt/mittelbar über eine Mobilfunk-Basisstation 202 erfolgen. Die wenigstens eine Empfangsstation 200 kann eine festinstallierte Station 200, z.B. ein PC und/oder ein Datenbankserver sein; sie kann auch eine mobile Empfangsstation sein, wie z.B. ein Mobiltelefon 204 (siehe Fig. 5). Es können auch mehrere Empfangsstationen 200, 204 vorgesehen sein, welche mobil und/oder feststehend sein können. Die Empfangsstationen 200, 204 befinden sich in der Regel an einem von der Dachschneelast-Überwachungseinrichtung 1 entfernten Ort, dessen Entfernung größer als die Reichweite der Kommunikationsverbindung zwischen der Hauptwaageeinheit 3 und der jeweiligen Nebenwaageeinheit 100 ist.

Wie aus den Figuren 1 und 5 ersichtlich ist, ist die Nebenwaage-Plattformfläche 107 der jeweiligen Nebenwaage-Plattform 105 kleiner als die Hauptwaage-Plattformfläche 7 der Hauptwaage-Plattform 5, z.B. um wenigstens 30%, oder z.B. wenigstens 50% kleiner.

Die Hauptwaageeinheit 3 und die jeweilige Nebenwaageeinheit 100 weisen jeweils eine Solareinrichtung 26, 126 auf, mittels welcher die Hauptwaageeinheit 3 und die Nebenwaageeinheiten 100 jeweils zugeordnet mit elektrischer Energie versorgbar sind, wobei die Hauptwaage-Batterie 15 und die jeweilige Nebenwaage-Batterie 113 aufladbar ausgeführt sind und von der Solareinrichtung 26, 126 mit elektrischer Energie versorgbar sind. Die jeweilige Solareinrichtung 26, 126 hat z.B. einen Mast 28, 128, der benachbart der Hauptwaage-Plattform 5 bzw. benachbart der Nebenwaage-Plattform 105 angeordnet ist und sich von dort aus vertikal nach oben erstreckt, und ein Solarpaneel 30, 130, das an dem Mast 28, 128, z.B. einem vertikal oberen Endabschnitt davon, befestigt ist.

Der jeweilige Mast 28, 128 kann z. B. dazu verwendet werden, um daran die jeweiligen bzw. die jeweils zugehörigen RF-Antennen 22, 125 sowie die dem Mast 28 der Hauptwaageeinheit 3 zugehörige GSM-Antenne 24 anzubringen. An dem jeweiligen Mast 28, 128 können auch noch zusätzliche Sensoren angebracht, wie z.B. ein wie oben erläuterter Wasserstandsensor 127 oder ein Schneehöhensensor (nicht gezeigt).

Die jeweiligen Sensorsignale werden dann in der wie in dieser Anmeldung beschrieben Weise entweder direkt (bei Vorliegen des Sensors an der Hauptwaageeinheit 3 oder über die jeweilige Neben-Steuer- und Kommunikationseinrichtung 111 (bei Vorliegen des Sensors an der Nebenwaageeinheit 100) an die Haupt-Steuer- und Kommunikationseinrichtung 13 übermittelt, um von dieser dann ggf. weiterverarbeitet und als Informations- und/oder Warnsignal/e in der wie in dieser Anmeldung beschriebenen Weise an die wenigstens eine Empfangsstation 200 weiterübermittelt zu werden.

In einer Ausführungsform können die jeweiligen Masten 28, 128 auch einfach mit einer optisch nach außen hin sichtbaren Markierung, z.B. einer Skala, z.B. farblichen Markierung, versehen sein, sodass die Schneehöhe von z.B. einem das Dach wartendem Personal unmittelbar visuell erfassbar ist.

Die seitliche Umgrenzungsvorrichtung 9, welche auf der Hauptwaage-Plattform 5 angeordnet ist, ist in den gezeigten Ausführungsformen z.B. als Gitterkorb 9 ausgeführt, der z.B. in der Draufsicht kreiszylindrisch (siehe z.B. Fig. 2B) oder rechteckig (siehe z.B. Fig. 2C) ausgebildet sein kann. Die Hauptwaage-Plattform 5 und damit deren Hauptwaage-Plattformfläche 7 (und auch die Nebenwaageplattform 105 und damit deren Nebenwaage-Plattformfläche 107) können in der Draufsicht z.B. rund, z.B. kreisrund (siehe Fig. 2B), oder z.B. eckig, z.B. rechteckig (siehe Fig. 2C) ausgebildet sein.

Die jeweilige Nebenwaage-Plattform 105 ist z.B. mit keinerlei seitlicher bzw. randseitiger Umgrenzung bzw. Begrenzung versehen (siehe z.B. Figur 3); die Nebenwaage-Plattform 105 kann aber auch mit einer randseitigen Seitenbegrenzung 108 (siehe Fig. 4) versehen sein, von welcher zumindest ein Teil der Nebenwaage-Plattformfläche 107 seitlich, z.B. umfangsrandseitig, begrenzt bzw. umgrenzt ist, wobei aber die Seitenbegrenzung 108 der Nebenwaageinheit 100 in ihrer Höhe h erheblich kleiner ist als die seitliche Umgrenzungsvorrichtung 9 der Hauptwaageinheit 3, wobei diese Höhe h z.B. nur einige Zentimeter (z.B. kleiner gleich 10cm, z.B. kleiner gleich 5cm) betragen kann.

Die Höhe H der seitlichen Umgrenzungsvorrichtung 9 der Hauptwaageeinheit 3 liegt z.B. in einem Bereich von 0,5-1,8m.

Wie aus Fig. 4 ersichtlich ist, kann die Seitenbegrenzung 108 der Nebenwaage-Plattform 105 der jeweiligen Nebenwaageeinheit 100 z.B. nur an zwei gegenüberliegenden Seitenrandabschnitten ausgebildet sein, wobei die Nebenwaage-Plattform 105 ansonsten seitenbegrenzungsfrei ist. Im Falle dass die randseitig angeordnete Seitenbegrenzung 108 der Nebenwaage-Plattform 105 rundum geschlossen ausgebildet ist, kann z.B. ein Wasserstandsensor (nicht gezeigt) in/an dem von der Seitenbegrenzung 108 umgebenen Bereich der Nebenwaage-Plattform 105 bzw. deren Nebenwaage-Plattformfläche 107 vorgesehen sein, mittels dessen der Wasserstand von innerhalb der Seitenbegrenzung 108 sich aufstauendem Wasser, z.B. Tauwasser, erfassbar ist und entsprechende Wasserstandsignale in der wie oben beschriebenen Daten/Signal-Übertragungsweise an die Haupt-Steuer- und Kommunikationseinrichtung übermittelbar sind.

Figur 5 zeigt schematisch ein Dachlastüberwachungssystem 500 gemäß einer Ausführungsform, welches aufweist ein Gebäude 502, das ein Dach 504 in Form eines Flachdachs hat, und eine wie in dieser Anmeldung erläuterte Dachschneelast-Überwachungseinrichtung 1, die auf dem Dach 504 angeordnet ist. Das Dachlastüberwachungssystem 500 umfasst ferner die Empfangsstation 200, die z.B. in einem anderen Gebäude (nicht gezeigt) feststehend angeordnet ist, und umfasst z.B. die mobile Empfangsstation 204, wobei die Haupt-Steuer- und Kommunikationseinrichtung 13 der Dachschneelast-Überwachungseinrichtung 1 in einer wie in dieser Anmeldung beschriebenen Weise eingerichtet ist, um die von ihr erzeugten Informations- und/oder Warnsignale an die wenigstens eine Empfangsstation 200 und z.B. ebenfalls an die mobile Empfangsstation 204 zu senden. Bei der in Figur 5 gezeigten Ausführungsform erfolgt die kabellose Signalübertragung zwischen der Hauptwaageeinheit 3 (bzw. deren Haupt-Steuer- und Kommunikationseinheit 13) und der jeweiligen Empfangsstation 200, 204 mittelbar über die Mobilfunk-Basisstation 202.

Das Dachlastüberwachungssystem 500 gemäß der Erfindung kann auch mehrere wie in Figur 5 gezeigte Gebäude 502 aufweisen, die zueinander benachbart sein können, z.B. einen Gebäudekomplex bilden, oder die auch an voneinander entfernten Standorten angeordnet sein können, wobei jedes Gebäude 502 auf seinem Dach 504 mit einer wie in dieser Anmeldung beschriebenen Dachschneelast-Überwachungseinrichtung 1 ausgestattet ist, die mit der wenigstens einen Empfangsstation 200 wie in dieser Anmeldung beschrieben kommuniziert. D.h., die wenigstens eine Empfangsstation 200 wird z.B. zentral als alleinige Empfangsstation 200 des Dachlastüberwachungssystem 500 für die dann mehreren Dachschneelast-Überwachungseinrichtungen 1 herangezogen.

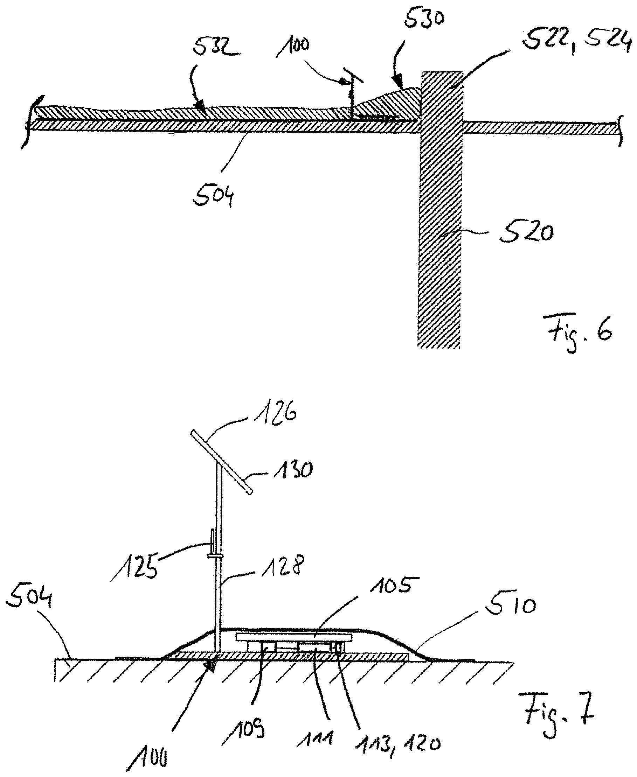

Die Hauptwaageeinheit 3 der (jeweiligen) Dachschneelast-Überwachungseinrichtung 1 ist z.B. unbefestigt und freistehend auf dem Dach 504 angeordnet, und die jeweilige Nebenwaageeinheit 100 ist z.B. auf dem Dach 504 fixiert, wobei die Fixierung z.B., wie in Fig. 7 gezeigt, dadurch erfolgen kann, dass die Nebenwaageeinheit 100 mit ihrer Nebenwaage-Plattform 105, und z.B. auch mit weiteren Komponenten, unter einer Dachfolie 510 angeordnet ist, welche ihrerseits am Dach 504 fixiert ist, wobei der jeweilige Mast 128 die Dachfolie 510 durchdringt.

Im Falle, dass das Gebäude 504 mit einer Brandschutzwand 520 (siehe Figur 6) ausgestattet ist, kann sich diese Brandschutzwand 520 mit einem oberen Endabschnitt 522 vertikal über das Gebäude 502 bzw. das Gebäude-Dach 504 hinauserstrecken, wobei dieser obere Endabschnitt 522 damit eine Gebäudewandverlängerung 524 darstellt (siehe Figuren 5 und 6). In diesem Falle kann es vorteilhaft sein, wenigstens eine der Nebenwaageeinheiten 100 benachbart zu einer solchen vertikalen Brandschutzwand 520 bzw. Gebäudewandverlängerung 524 anzuordnen, weil sich in diesem Bereich ggf. Schneeanhäufungen 530 einer ansonsten flacheren Schneelast 532 bilden können. Gleiches kann auch benachbart zu anderen auf dem Dach vorliegenden Vorsprüngen, z.B. Schornsteinen, erfolgen.

## Patentansprüche

1. Dachschneelast-Überwachungseinrichtung (1) mit
einer Hauptwaageeinheit (3), welche aufweist
eine Hauptwaage-Plattform (5) mit einer Hauptwaage-Plattformfläche (7),
einen Hauptwaage-Gewichtssensor (11), welcher mit der Hauptwaage-Plattform (5) verbunden ist und von welchem ein elektrisches Hauptwaage-Gewichtssignal erzeugbar ist, welches einem auf der Hauptwaage-Plattform (5) vorliegenden Gewicht zugeordnet ist,
eine elektronische Haupt-Steuer- und Kommunikationseinrichtung (13), welche mit dem Hauptwaage-Gewichtssensor (11) verbunden ist, um das Hauptwaage-Gewichtssignal zu empfangen, unde
eine Hauptwaage-Batterie (15), welche mit dem Hauptwaage-Gewichtssensor (11) und der elektronischen Haupt-Steuer- und Kommunikationseinrichtung (13) verbunden ist, um diese mit elektrischer Energie zu versorgen,
einer Mehrzahl von Nebenwaageeinheiten (100), welche jeweils aufweisen
eine Nebenwaage-Plattform (105) mit einer Nebenwaage-Plattformfläche (107),
einen Nebenwaage-Gewichtssensor (109), welcher mit der Nebenwaage-Plattform (105) verbunden ist und von welchem ein elektrisches Nebenwaage-Gewichtssignal erzeugbar ist, welches einem auf der Nebenwaage-Plattform (105) vorliegenden Gewicht zugeordnet ist,
eine elektronische Neben-Steuer- und Kommunikationseinrichtung (111), welche mit dem Nebenwaage-Gewichtssensor (109) verbunden ist, um das Nebenwaage-Gewichtssignal zu empfangen, und von welcher das Nebenwaage-Gewichtssignal, bevorzugt kabellos, an die Haupt-Steuer- und Kommunikationseinrichtung (13) übertragbar ist, und
eine Nebenwaage-Batterie (113), welche mit dem Nebenwaage-Gewichtssensor (109) und der elektronischen Neben-Steuer- und Kommunikationseinrichtung (111) verbunden ist, um diese mit elektrischer Energie zu versorgen,
wobei die Haupt-Steuer- und Kommunikationseinrichtung (13) eingerichtet ist, sodass von ihr in Abhängigkeit von den empfangenen Hauptwaage- und Nebenwaage-Gewichtssignalen ein Informations- und/oder Warnsignal erzeugbar und, bevorzugt kabellos, an wenigstens eine Empfangsstation (200) übertragbar ist, um dort von einem Benutzer erfasst werden zu können,
wobei die Nebenwaage-Plattformfläche (107) der jeweiligen Nebenwaage-Plattform (105) kleiner ist als die Hauptwaage-Plattformfläche (7) der Hauptwaage-Plattform (5), optional um wenigstens 30%, weiter optional um wenigstens 50% kleiner.

2. Dachschneelast-Überwachungseinrichtung (1) gemäß Anspruch 1, wobei die Nebenwaage-Plattformfläche (107) eine Flächengröße von mindestens 0,07 m² hat.

3. Dachschneelast-Überwachungseinrichtung (1) gemäß Anspruch 1 oder 2, wobei die Hauptwaageeinheit (3) ferner aufweist eine seitliche Umgrenzungsvorrichtung (9), welche auf der Hauptwaage-Plattform (5) angeordnet ist und von welcher zumindest ein Großteil der Hauptwaage-Plattformfläche (7) seitlich zumindest teilweise, optional zumindest im Wesentlichen rundum, umgrenzt ist.

4. Dachschneelast-Überwachungseinrichtung (1) gemäß einem der Ansprüche 1 bis 3, wobei die Nebenwaageeinheiten (100) im Abstand von der Hauptwaageeinheit (3) und im Abstand zueinander angeordnet sind, und optional um die Hauptwaageeinheit (3) herum angeordnet sind.

5. Dachschneelast-Überwachungseinrichtung (1) gemäß Anspruch 4, wobei die Abstände zwischen den Nebenwaageeinheiten (100) und der Hauptwaageeinheit (3) in einem Bereich von 10-500m liegen, und/oder wobei die Abstände zwischen den Nebenwaageeinheiten (100) untereinander in einem Bereich von 10-500m liegen.

6. Dachschneelast-Überwachungseinrichtung (1) gemäß einem der Ansprüche 1-5, wobei die Hauptwaageeinheit (3) eine Solareinrichtung (26) aufweist, mittels welcher die Hauptwaageeinheit (3) mit elektrischer Energie versorgbar ist, wobei optional die Hauptwaage-Batterie (15) aufladbar ist und von der Solareinrichtung (26) mit elektrischer Energie versorgbar ist, und/oder wobei
wenigstens eine der Nebenwaageeinheiten (100) oder die jeweilige Nebenwaageeinheit (100) eine Solareinrichtung (126) aufweist, mittels welcher die Nebenwaageeinheit (100) mit elektrischer Energie versorgbar ist, wobei optional die Nebenwaage-Batterie (113) aufladbar ist und von der Solareinrichtung (126) mit elektrischer Energie versorgbar ist.

7. Dachschneelast-Überwachungseinrichtung (1) gemäß einem der Ansprüche 1-6,
- wobei die Nebenwaage-Plattform (105) eine Seitenbegrenzung (108) aufweist, die eine kleinere Höhe (h) hat als die seitliche Umgrenzungsvorrichtung (9) der Hauptwaageinheit, wobei optional diese Seitenbegrenzung (108) unterbrochen ist und damit nur abschnittsweise seitlich vorliegt, oder
- wobei die Nebenwaage-Plattform (105) seitenbegrenzungsfrei ist.

8. Dachschneelast-Überwachungseinrichtung (1) gemäß Anspruch 7, wobei die Seitenbegrenzung (108) der Nebenwaage-Plattform (105) eine Höhe (h) im Bereich von 0-20%, optional von 0-10%, ferner optional von 0-2%, der Höhe (H) der seitlichen Umgrenzungsvorrichtung (9) der Hauptwaageeinheit (3) hat, und wobei die Höhe (H) der seitlichen Umgrenzungsvorrichtung (9) der Hauptwaageeinheit (3) optional in einem Bereich von 0,5-1,8m, ferner optional in einem Bereich von 0,5-1,5m, und noch ferner optional in einem Bereich von 0,5-1,2m liegt.

9. Dachschneelast-Überwachungseinrichtung (1) gemäß einem der Ansprüche 1-8, wobei die Hauptwaage-Plattformfläche (7) eine Flächengröße in einem Bereich von 0,3 - 1,5 m², optional in einem Bereich von 0,4 - 1,2 m², hat.

10. Dachschneelast-Überwachungseinrichtung (1) gemäß einem der Ansprüche 1-9, wobei die Hauptwaageeinheit (3) und die jeweilige Nebenwaageeinheit (100) jeweils energieautark und/oder kabelanschluss-frei sind.

11. Dachlastüberwachungssystem (500) mit mindestens einer Dachschneelast-Überwachungseinrichtung (1) gemäß einem der vorigen Ansprüche und wenigstens einer Empfangsstation (200), wobei die Haupt-Steuer- und Kommunikationseinrichtung (13) der jeweiligen Dachschneelast-Überwachungseinrichtung (1) eingerichtet ist, um das von ihr erzeugte Informations- und/oder Warnsignal an die wenigstens eine Empfangsstation (200) zu senden.

12. Dachlastüberwachungssystem (500) gemäß Anspruch 11, mit einem Gebäude (502), das mit einem Dach (504), welches eine Dachschräge von maximal 15° hat, optional einem Flachdach, ausgestattet ist, und wobei die Dachschneelast-Überwachungseinrichtung (1) auf dem Dach (504) angeordnet ist.

13. Dachlastüberwachungssystem (500) mit
einer Mehrzahl von Gebäuden (502), welche jeweils ein Dach (504) mit einer Dachschräge von maximal 15°, optional ein Flachdach, haben und von denen jedes mit einer Dachschneelast-Überwachungseinrichtung (1) gemäß einem der Ansprüche 1-10 ausgestattet ist, die auf einem jeweils zugeordneten der Dächer (504) angeordnet ist, und mit
wenigstens einer Empfangsstation (200), wobei die Haupt-Steuer- und Kommunikationseinrichtung (13) der jeweiligen Dachschneelast-Überwachungseinrichtung (1) eingerichtet ist, um das von ihr erzeugte Informations- und/oder Warnsignal an die wenigstens eine Empfangsstation (200) zu senden.

14. Dachlastüberwachungssystem (500) gemäß einem der Ansprüche 12-13,
wobei die Hauptwaageeinheit (3) unbefestigt und freistehend auf dem Dach (504) angeordnet ist, und/oder
wobei die jeweilige Nebenwaageeinheit (100) auf dem Dach (504) fixiert ist, optional dadurch fixiert ist, dass die Nebenwaage-Plattform (105) unter einer Dachfolie (510) angeordnet ist, welche ihrerseits am Dach (504) fixiert ist.

15. Dachlastüberwachungssystem (500) gemäß einem der Ansprüche 12-14,
wobei das Gebäude (502) oder wenigstens eines der Gebäude (502) eine oder mehrere vertikale Gebäudewandverlängerungen (524) aufweist, die sich über die Dachfläche hinausgehend erstrecken und die optional von oberen Abschnitten (522) von in dem Gebäude vorliegenden Brandschutzwänden (520) gebildet sind, und
wobei benachbart zu einer jeweiligen vertikalen Gebäudewandverlängerung (524) wenigstens eine Nebenwaageeinheit (100) angeordnet ist.

## Claims

1. Roof snow load monitoring device (1), having:
a main balance unit (3), comprising:
a main balance platform (5) having a main balance platform surface (7),
a main balance weight sensor (11) which is connected to the main balance platform (5) and by which an electrical main balance weight signal can be generated which is associated with a weight present on the main balance platform (5),
an electronic main control and communication device (13) connected to the main balance weight sensor (11) to receive the main balance weight signal, and
a main balance battery (15) which is connected to the main balance weight sensor (11) and the electronic main control and communication device (13) to supply these with electrical energy,
a plurality of secondary balance units (100), each comprising:
a secondary balance platform (105) having a secondary balance platform surface (107),
a secondary balance weight sensor (109) connected to the secondary balance platform (105) and by which an electrical secondary balance weight signal is generable, which is associated with a weight present on the secondary balance platform (105),
an electronic secondary control and communication device (111) which is connected to the secondary balance weight sensor (109) to receive the secondary balance weight signal and by which the secondary balance weight signal is transmittable, preferably wirelessly, to the main control and communication device (13), and
a secondary balance battery (113), which is connected to the secondary balance weight sensor (109) and to the electronic secondary control and communication device (111) in order to supply these with electrical energy,
wherein the main control and communication device (13) is configured such that an information and/or warning signal can be generated by it as a function of the received main balance and secondary balance weight signals and is transmittable, preferably wirelessly, to at least one receiving station (200) in order to there be detectable by a user,
wherein the secondary balance platform surface (107) of the respective secondary balance platform (105) is smaller than the main balance platform surface (7) of the main balance platform (5), optionally by at least 30%, further optionally by at least 50% smaller.

2. Roof snow load monitoring device (1) according to claim 1, wherein the secondary balance platform surface (107) has a surface area of at least 0.07 m².

3. Roof snow load monitoring device (1) according to claim 1 or 2, wherein the main balance unit (3) further comprises a lateral boundary device (9) which is arranged on the main balance platform (5) and by which at least a major part of the main balance platform surface (7) is laterally bounded at least partially, optionally at least substantially all around.

4. Roof snow load monitoring device (1) according to any one of claims 1 to 3, wherein the secondary balance units (100) are spaced apart from the main balance unit (3) and spaced apart from each other, and are optionally arranged around the main balance unit (3).

5. Roof snow load monitoring device (1) according to claim 4, wherein the distances between the secondary balance units (100) and the main balance unit (3) are in a range of 10-500 m, and/or wherein the distances between the secondary balance units (100) among each other are in a range of 10-500 m.

6. Roof snow load monitoring device (1) according to any one of claims 1-5, wherein the main balance unit (3) comprises a solar device (26) by means of which the main balance unit (3) can be supplied with electrical energy, wherein optionally the main balance battery (15) can be charged and supplied with electrical energy by the solar device (26), and/or wherein
at least one of the secondary balance units (100) or the respective secondary balance unit (100) comprises a solar device (126) by means of which the secondary balance unit (100) can be supplied with electrical energy, wherein optionally the secondary balance battery (113) can be charged and supplied with electrical energy by the solar device (126) .

7. Roof snow load monitoring device (1) according to any one of claims 1-6,
- wherein the secondary balance platform (105) comprises a lateral boundary (108) having a smaller height (h) than the lateral boundary device (9) of the main balance unit, wherein optionally said lateral boundary (108) is interrupted and thus present laterally only in sections, or
- wherein the secondary balance platform (105) is free of a lateral boundary.

8. Roof snow load monitoring device (1) according to claim 7, wherein the lateral boundary (108) of the secondary balance platform (105) has a height (h) in a range of 0-20%, optionally of 0-10%, further optionally of 0-2%, of the height (H) of the lateral boundary device (9) of the main balance unit (3), and wherein the height (H) of the lateral boundary device (9) of the main balance unit (3) is optionally in a range of 0.5-1.8 m, further optionally in a range of 0.5-1.5 m, and still further optionally in a range of 0.5-1.2 m.

9. Roof snow load monitoring device (1) according to any one of claims 1-8, wherein the main balance platform surface (7) has a surface area in a range of 0.3-1.5 m², optionally in a range of 0.4-1.2 m².

10. Roof snow load monitoring device (1) according to any one of claims 1-9, wherein the main balance unit (3) and the respective secondary balance unit (100) are each energy self-sufficient and/or cable connection-free.

11. Roof load monitoring system (500) comprising at least one roof snow load monitoring device (1) according to any one of the preceding claims and at least one receiving station (200), wherein the main control and communication device (13) of the respective roof snow load monitoring device (1) is configured to transmit the information and/or warning signal generated by it to the at least one receiving station (200).

12. Roof load monitoring system (500) according to claim 11, with a building (502) provided with a roof (504) having a roof slope of a maximum of 15°, optionally a flat roof, and wherein the roof snow load monitoring device (1) is arranged on the roof (504).

13. Roof load monitoring system (500) with
a plurality of buildings (502), each of which having a roof (504) with a roof slope of a maximum of 15°, optionally a flat roof, and each of which being equipped with a roof snow load monitoring device (1) according to any one of claims 1-10, which is arranged on a respectively associated one of the roofs (504), and with
at least one receiving station (200), wherein the main control and communication device (13) of the respective roof snow load monitoring device (1) is configured to transmit the information and/or warning signal generated by it to the at least one receiving station (200).

14. Roof load monitoring system (500) according to any one of claims 12-13,
wherein the main balance unit (3) is arranged unattached and freestanding on the roof (504), and/or
wherein the respective secondary balance unit (100) is fixed on the roof (504), optionally fixed by the secondary balance platform (105) being arranged under a roof foil (510), which in turn is fixed to the roof (504).

15. Roof load monitoring system (500) according to any one of claims 12-14,
wherein the building (502) or at least one of the buildings (502) comprises one or more vertical building wall extensions (524) which extend beyond the roof surface and which are optionally formed by upper portions (522) of fire walls (520) present in the building, and
wherein at least one secondary balance unit (100) is arranged adjacent to a respective vertical building wall extension (524).

## Revendications

1. Dispositif de surveillance de charge de neige de toit (1) avec
une unité de balance principale (3), qui comprend :
une plateforme de balance principale (5) avec une surface de plateforme de balance principale (7),
un capteur de poids de balance principale (11) qui est connecté à la plateforme de balance principale (5) et par lequel un signal électrique de poids de balance principale peut être généré, lequel est associé à un poids présent sur la plateforme de balance principale (5),
un dispositif électronique de commande et de communication principal (13) connecté au capteur de poids de balance principale (11) pour recevoir le signal de poids de balance principale, et
une batterie de balance principale (15) connectée au capteur de poids de balance principale (11) et au dispositif électronique de commande et de communication principal (13) pour alimenter ceux-ci en énergie électrique,
une pluralité d'unités de balance secondaires (100), chacune comprenant
une plateforme de balance secondaire (105) avec une surface de plateforme de balance secondaire (107),
un capteur de poids de balance secondaire (109) qui est connecté à la plateforme de balance secondaire (105) et par lequel un signal électrique de poids de balance secondaire peut être généré, lequel est associé à un poids présent sur la plateforme de balance secondaire (105),
un dispositif électronique de commande et de communication secondaire (111), qui est connecté au capteur de poids de balance secondaire (109) pour recevoir le signal de poids de balance secondaire, et par lequel le signal de poids de balance secondaire peut être transmis, de préférence sans câble, au dispositif de commande et de communication principal (13), et
une batterie de balance secondaire (113), qui est connectée au capteur de poids de balance secondaire (109) et au dispositif électronique de commande et de communication secondaire (111), afin d'alimenter ceux-ci en énergie électrique,
dans lequel le dispositif de commande et de communication principal (13) est configuré de telle sorte qu'un signal d'information et/ou d'avertissement peut être généré par celui-ci en fonction des signaux de poids de balance principale et de balance secondaire reçus et peut être transmis, de préférence sans câble, à au moins une station de réception (200), afin de pouvoir y être saisi par un utilisateur,
dans lequel la surface de plateforme de balance secondaire (107) de la plateforme de balance secondaire respective (105) est plus petite que la surface de plateforme de balance principale (7) de la plateforme de balance principale (5), en option plus petite d'au moins 30%, plus en option d'au moins 50%.

2. Dispositif de surveillance de charge de neige de toit (1) selon la revendication 1, dans lequel la surface de plateforme de balance secondaire (107) a une taille de surface d'au moins 0,07 m².

3. Dispositif de surveillance de charge de neige de toit (1) selon la revendication 1 ou 2, dans lequel l'unité de balance principale (3) comprend en outre un dispositif de délimitation latérale (9) qui est disposé sur la plateforme de balance principale (5) et par lequel au moins une grande partie de la surface de plateforme de balance principale (7) est délimitée latéralement au moins partiellement, en option au moins sensiblement tout autour.

4. Dispositif de surveillance de charge de neige de toit (1) selon l'une quelconque des revendications 1 à 3, dans lequel les unités de balance secondaires (100) sont espacées de l'unité de balance principale (3) et espacées les unes des autres, et sont optionnellement disposées autour de l'unité de balance principale (3).

5. Dispositif de surveillance de charge de neige de toit (1) selon la revendication 4, dans lequel les distances entre les unités de balance secondaires (100) et l'unité de balance principale (3) sont dans une plage de 10-500 m, et/ou dans lequel les distances entre les unités de balance secondaires (100) entre elles sont dans une plage de 10-500 m.

6. Dispositif de surveillance de charge de neige de toit (1) selon l'une quelconque des revendications 1 à 5, dans lequel l'unité de balance principale (3) comprend un dispositif solaire (26) au moyen duquel l'unité de balance principale (3) peut être alimentée en énergie électrique, dans lequel, en option, la batterie de balance principale (15) peut être rechargée et peut être alimentée en énergie électrique par le dispositif solaire (26), et/ou dans lequel
au moins l'une des unités de balance secondaires (100) ou l'unité de balance secondaire respective (100) comprend un dispositif solaire (126) au moyen duquel l'unité de balance secondaire (100) peut être alimentée en énergie électrique, la batterie de balance secondaire (113) pouvant être rechargée en option et pouvant être alimentée en énergie électrique par le dispositif solaire (126).

7. Dispositif de surveillance de charge de neige de toit (1) selon l'une quelconque des revendications 1-6,
- dans lequel la plateforme de balance secondaire (105) présente une limite latérale (108) qui a une hauteur (h) inférieure au dispositif de délimitation latérale (9) de l'unité de balance principale, cette limite latérale (108) étant optionnellement interrompue et n'étant ainsi présente latéralement que par sections, ou
- dans lequel la plateforme de balance secondaire (105) est exempte de limite latérale.

8. Dispositif de surveillance de charge de neige de toit (1) selon la revendication 7, dans lequel la limite latérale (108) de la plateforme de balance secondaire (105) a une hauteur (h) dans la plage de 0 à 20 %, en option de 0 à 10 %, en outre en option de 0 à 2 %, de la hauteur (H) du dispositif de délimitation latérale (9) de l'unité de balance principale (3), et dans lequel la hauteur (H) du dispositif de délimitation latérale (9) de l'unité de balance principale (3) est en option dans une plage de 0,5 à 1,8 m, en outre en option dans une plage de 0,5 à 1,5 m, et encore plus en option dans une plage de 0,5 à 1,2 m.

9. Dispositif de surveillance de charge de neige de toit (1) selon l'une quelconque des revendications 1 à 8, dans lequel la surface de plateforme de balance principale (7) a une taille de surface dans une plage de 0,3 à 1,5 m², en option dans une plage de 0,4 à 1,2 m².

10. Dispositif de surveillance de charge de neige de toit (1) selon l'une quelconque des revendications 1 à 9, dans lequel l'unité de balance principale (3) et l'unité de balance secondaire respective (100) sont chacune autonomes en énergie et/ou exemptes de connexion par câble.

11. Système de surveillance de charge de toit (500) avec au moins un dispositif de surveillance de charge de neige de toit (1) selon l'une quelconque des revendications précédentes et au moins une station de réception (200), le dispositif de commande et de communication principal (13) du dispositif de surveillance de charge de neige de toit respectif (1) étant configuré pour envoyer le signal d'information et/ou d'avertissement généré par celui-ci à ladite au moins une station de réception (200).

12. Système de surveillance de charge de toit (500) selon la revendication 11, avec un bâtiment (502) équipé d'un toit (504) qui présente une pente de toit de 15° au maximum, en option un toit plat, et dans lequel le dispositif de surveillance de charge de neige de toit (1) est disposé sur le toit (504).

13. Système de surveillance de charge de toit (500) avec
une pluralité de bâtiments (502) qui ont chacun un toit (504) avec une pente de toit de 15° au maximum, en option un toit plat, et dont chacun est équipé d'un dispositif de surveillance de charge de neige de toit (1) selon l'une quelconque des revendications 1 à 10, qui est disposé sur l'un des toits (504) respectivement associé, et avec
au moins une station de réception (200), le dispositif de commande et de communication principal (13) du dispositif de surveillance de charge de neige de toit (1) respectif étant configuré pour envoyer le signal d'information et/ou d'avertissement généré par celui-ci à ladite au moins une station de réception (200).

14. Système de surveillance de charge de toit (500) selon l'une quelconque des revendications 12 à 13,
dans lequel l'unité de balance principale (3) est disposée de manière non-fixée et de manière autoportante sur le toit (504), et/ou
dans lequel l'unité de balance secondaire respective (100) est fixée sur le toit (504), en option fixée par la plateforme de balance secondaire (105) étant disposée sous une feuille de toit (510), qui est elle-même fixée au toit (504) .

15. Système de surveillance de charge de toit (500) selon l'une quelconque des revendications 12 à 14,
dans lequel le bâtiment (502) ou au moins l'un des bâtiments (502) comprend une ou plusieurs extensions de mur de bâtiment verticales (524) qui s'étendent au-delà de la surface de toit et qui sont en option formées par des parties supérieures (522) de murs coupe-feu (520) présents dans le bâtiment, et
dans lequel au moins une unité de balance secondaire (100) est disposée adjacente à une extension de mur de bâtiment verticale respective (524).
